# EUROPEAN PATENT SPECIFICATION

(11) **EP 4 033 172 B1**
(45) Date of publication and mention of the grant of the patent: **02.07.2025**
(21) Application number: 21216317.4
(22) Date of filing: 21.12.2021
(51) Int. Cl.: F24H 1/16, F24H 1/40, F24H 1/43, F24H 1/44, F24H 8/00, F24H 9/02, F28D 7/02, F28F 1/02, F28F 9/00

(54) **A HEAT EXCHANGE CELL FOR A HEATING CONDENSING BOILER**
WÄRMEAUSTAUSCHZELLE FÜR EINEN HEIZKONDENSATIONSKESSEL
CELLULE D'ÉCHANGE DE CHALEUR POUR UNE CHAUDIÈRE À CONDENSATION

(30) Priority: 21.01.2021 IT 202100001046
(43) Date of publication of application: 27.07.2022
(73) Proprietor: Condevo S.p.A., 20123 Milano (IT)
(72) Inventor: GIANNONI, Rocco, I-20123 Milano (IT)
(74) Representative: Leihkauf, Steffen Falk

(56) References cited:
- EP-A1- 3 540 325
- WO-A1-2004/036121
- WO-A1-2015/140664
- WO-A1-2019/106567
- WO-A2-2011/117802
- FR-A1- 2 854 229
- IT-A1- 201800 003 451

## Description

### Field of the invention

The present invention relates to a heat exchange cell for a heating condensing boiler.

### Background art

The condensing boiler technique is known in the field of boilers for heating a building or a living environment.

This is a boiler comprising a heat exchange cell, where such a cell comprises a heat exchanger comprising a tubular pipe helically wound according to a plurality of helix turns and forming a central space defining a combustion chamber.

A container casing contains said heat exchanger mounted therein, and comprises a side casing wall arranged about the exchanger and forming a fume collection chamber radially interposed between the exchanger and the side casing wall.

The tubular pipe of the exchanger is configured to be traveled therein by a fluid to be heated for a successive introduction into a circuit of a heating system, and it is configured to be externally lapped by a heating fluid consisting of the combustion fumes produced in the combustion chamber, which reach the fume collection chamber after passing between the spaces between the helix turns and transferring heat to the fluid to be heated.

The temperature in the combustion chamber reaches about 800°-850°C.

The side casing wall is closed at the front by a closing flange sealingly mounted to the annular edge of the side wall and having a central opening for accessing the combustion chamber for operations of maintenance.

Furthermore, the known heat exchange cell comprises a closing door configured to removably close the central flange opening during use.

Thus, the door is brought into contact with the flange, forming a seal for the gases therewith.

Sometimes, the seal is obtained by means of an annular gasket interposed between the closing flange and the edge of the door.

The closing flange is in contact with an end helix turn of the helicoid exchanger, and with the refractory disk, which is exposed to the temperature of the combustion chamber, therefore, such a flange is exposed to an elevated temperature.

In fact, the refractory disk has an inner face directly exposed towards the combustion chamber, which reaches a temperature of 850°C, and an opposite outer face in contact with the closing door, which reaches a temperature of 250°C.

However, the need is felt for the part of the flange, which is in contact with the closing door or, all the more so, in contact with the annular gasket, to be kept at a reduced temperature to avoid excessive thermal stress of the gasket, and/or excessive overheating of the flange itself, which, being in contact with the casing, would transmit, to the latter, an excessive amount of heat.

In fact, the gasket aims at ensuring a seal for the combustion fumes and the gases to prevent them from exiting from the inside to the outside of the heat exchange cell.

Thus, the integrity of the gasket is of key importance for ensuring the operating safety of the boiler.

Furthermore, the need to thermally protect the part of the flange in contact with the door, or with the gasket, is intended to be met, while containing the outer dimensions of the heat exchange cell so as to reduce the production costs.
In other words, the need is felt to improve the operating safety and efficiency of the heat exchange cell, while containing the production costs thereof.
WO 2011/117802 A2 discloses a heat exchanger having an exchanger unit, comprising at least one first coiled conduit and one second coiled conduit that are substantially coaxial, and a casing for housing the exchanger unit. The casing has a first end wall, a second end wall, and a peripheral part (5) between the two end walls. Each conduit has an inlet and an outlet, where the outlet of the first conduit is connected substantially in series to the inlet of the second conduit. The exchanger unit is supported by the first end wall of the casing, with the inlet of the first conduit and the outlet of the second conduit which are substantially at the first end wall of the casing.
EP3540325 A1 discloses a heat exchange cell for a heating boiler, comprising a casing comprising a side wall enclosing an internal space, said side wall having an open front end surrounded by an annular edge of the front end of the casing; an annular closing flange made from a sheet metal having a flange through opening to allow the access to the inside of the casing, said closing flange defining a radially internal flange edge surrounding said through opening, a radially external flange edge arranged around said radially internal edge, an intermediate flange portion connecting the radially external flange edge and the radially internal flange edge to one another, said radially external flange edge being connected to said side wall of the casing along said annular edge of the front end of the casing; wherein said radially internal edge defines a radially internal surface, a radially external surface arranged around said radially internal surface, a front edge surface connecting said radially internal surface and said radially external surface to one another, said front edge surface defining a lying plane on which said front edge surface lies, said lying plane defining an axial direction orthogonal to the lying plane and passing through the through opening, and a radial direction orthogonal to the axial direction; wherein said radially internal surface extends parallel to the axial direction in a manner protruding towards the outside of the cell with respect to said intermediate flange portion.
WO 2004/036121 A1 discloses a heat exchanger comprising at least one helically bound bundle of tubes, whereof the thermally conductive wall has a flattened and oval cross-section, whereof the main axis is perpendicular to that of the helix, while the width of the interstice separating two adjacent turns is small and constant, said bundle being fixedly mounted inside a casing fitted with a pipe for evacuating gases generated by a burner, means being provided for circulating cold water inside said bundle, said exchanger being further designed so that the hot gases pass radially through the bundle via the interstices of the turns. Said exchanger is characterized in that the casing is made of heat-resistant plastic material and means are provided for ensuring mechanical containment of the beam in the axial direction, and for damping the thrust loads resulting from the fluid internal pressure, preventing their being transmitted to the casing. The inventive condensation heat exchanger is particularly designed for domestic use and is inexpensive to produce. WO 2015/140664 A1 discloses a heat exchange cell comprising a containment casing comprising a rear wall, a front wall and a peripheral side wall, a helically-shaped heat exchanger comprising at least one tubular duct for the flow of a first heat transfer fluid coiled about a longitudinal axis of the helix according to a plurality of coils and mounted in the containment casing; a feeding zone of a second heat transfer fluid, intended for the heat exchange with the first heat transfer fluid, defined in the casing coaxially and internally with respect to the heat exchanger; a first chamber for collecting the second heat transfer fluid externally defined with respect to the heat exchanger between a radially outer wall thereof and the peripheral side wall of the containment casing; and a second chamber for collecting the second heat transfer fluid at least partially delimited by at least one separating element. The separating element is mounted at an axially external position with respect to the heat exchanger in such a way as to define the second chamber for collecting the second heat transfer fluid between the separating element, the peripheral side wall and the rear wall or the front wall of the containment casing; in this way, the first and the second collection chambers are in fluid communication with each other by means of at least one passage configured to allow a flow of the second heat transfer fluid substantially in parallel to the peripheral side wall of the casing and in proximity thereto. The separating element comprises a heat exchange portion in contact with at least one portion of an end coil of the heat exchanger and configured to allow a heat exchange between the coil-shaped portion of the heat exchanger and the second collection chamber , while the heat exchange cell further comprises at least one second passage allowing a fluid outlet from the second collection chamber peripherally defined in the second chamber between an axial end of the peripheral side wall and the rear wall or the front wall of the containment casing.
IT 201800003451 A1 discloses a closing door for a heat exchange cell, said cell having an envelope comprising a side wall enclosing an internal compartment, said side wall having an open front end, and an annular sheet metal closing flange fixed to said side wall to close said open front end, said closing flange having a through flange opening surrounded by a radially inner flange edge of tubular shape projecting outwardly of said cell, wherein the door comprises an insulating disc comprising a refractory material, said insulating disc defining a door axial direction and a radial direction with respect to said insulating disc, said insulating disc being laterally delimited by a closed side surface; a door plate to which said disc is secured and defining a substantially planar door mating surface extending along a closed contour about said side surface, and being disposed orthogonal to said side surface; said door comprising a thermal barrier device and a smoke seal device, wherein at least one of said thermal barrier device and said smoke seal device is arranged to cooperate with said door according to the radial direction.
WO 2019/106567 A1 discloses a heat exchange comprising a helically-shaped heat exchanger, mounted in a containment casing, in which a first heat transfer fluid circulates; a first heat exchange chamber, defined in the casing, in which a first heat exchange portion of the heat exchanger is housed and in which a first collection chamber of the second heat transfer fluid is defined externally to the heat exchanger; a second heat exchange chamber defined in the casing, in which a second heat exchange portion of the heat exchanger is housed and in which - externally to the heat exchanger - a second collection chamber of the second heat transfer fluid is defined; and a fluid outlet passage from the second heat exchange chamber defined in a peripheral side wall of the containment casing in proximity to a rear wall thereof. The first and second heat exchange chambers are separated internally to the heat exchanger by a first separating element comprising a substantially plate-shaped body and externally to the heat exchanger by at least a second separating element extending radially between a radially outer wall of the heat exchanger and the peripheral side wall of the containment casing so as to define at least one passage of fluid between the first and the second collection chamber of the second heat transfer fluid. The heat exchange cell further comprises a pair of axial separator baffles, axially extending between the second separating element and the rear wall of the containment casing, and configured to separate a first portion of the second collection chamber of the second heat transfer fluid defined upstream of the axial separator baffles from a second portion of the second collection chamber of the second heat transfer fluid defined downstream of the baffles.
FR 2854229 A1 discloses an exchanger having a primary and secondary heat exchanger constituted by respective set of coaxial tubes in a casing that includes a gas evacuation cuff. The exchangers are arranged to transverse flow of hot air generated by a burner towards an interstice of the heat exchangers to heat a fluid in the exchanger. A duct passes another flow of hot air into the secondary heat exchanger to reheat the fluid.

### Summary of the invention

It is the object of the present invention to devise and provide a heat exchange cell, which allows meeting the aforesaid needs and overcoming, at least partially, the above drawbacks with reference to the prior art.

In particular, it is a task of the present invention to provide a heat exchange cell capable of improving the operating safety and thermal exchange efficiency, while containing the production costs thereof.

Thus, it is an object of the present invention to prevent excessive overheating of the closing door of the cell, keeping the temperature thereof at a relatively low value, preferably no higher than 85°C.

It is another object of the present invention to keep the temperature of the area of contact between the closing flange and the closing door low, so as to keep the temperature of the closing door low.

It is another object of the present invention to prevent the overheating of a gasket for sealing the fumes, which is interposed between the closing flange and the door, so as to protect such a gasket from the risk of deteriorating as a result of the high temperature.

It is another object of the present invention to provide a heat exchange cell capable of safely using a gasket for sealing the fumes which is interposed between the flange and the door, where such a gasket does not require an elevated resistance to the high temperature, and therefore, is more cost-effective than the gasket of the known art.

It is another object of the present invention to provide a heat exchange cell capable of keeping the temperature low in the area of contact between the flange and the door, while limiting the external dimensions of the diameter of the flange, so as to reduce the amount of material forming the flange, with a consequent reduction in the production cost of the heat exchange cell.

These and other objects and advantages are achieved by a heat exchange cell for a heating condensing boiler according to the independent claim.

Further objects, solutions, and advantages are present in the embodiments described below and claimed in the dependent claims.

### Brief description of the drawings

The invention will be shown below by describing some embodiments by way of non-limiting example, with reference to the accompanying drawings, in which:

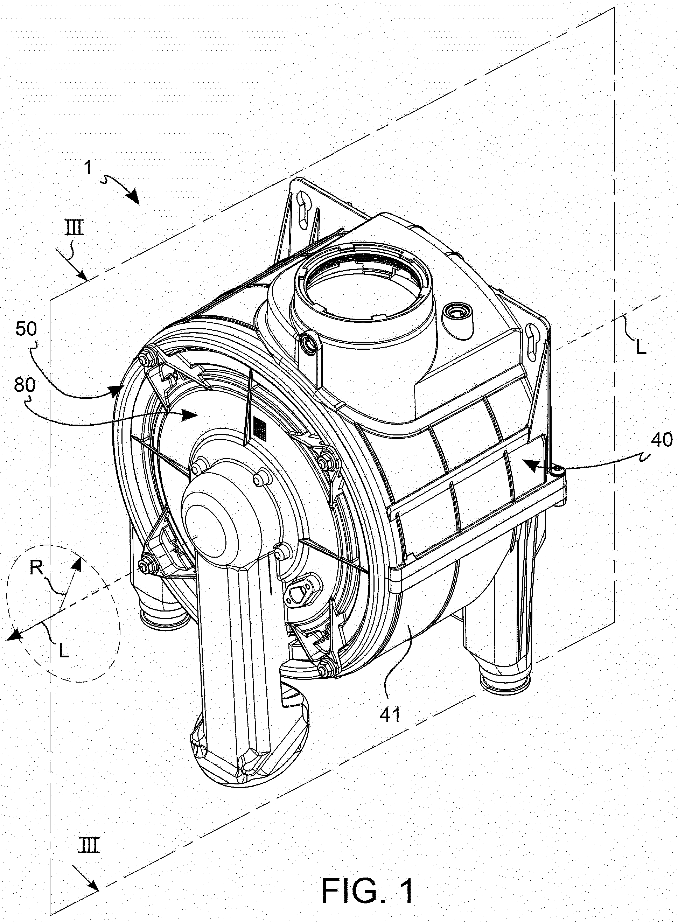

- figure 1 depicts a perspective view of a heat exchange cell according to the invention for a heating condensing boiler;

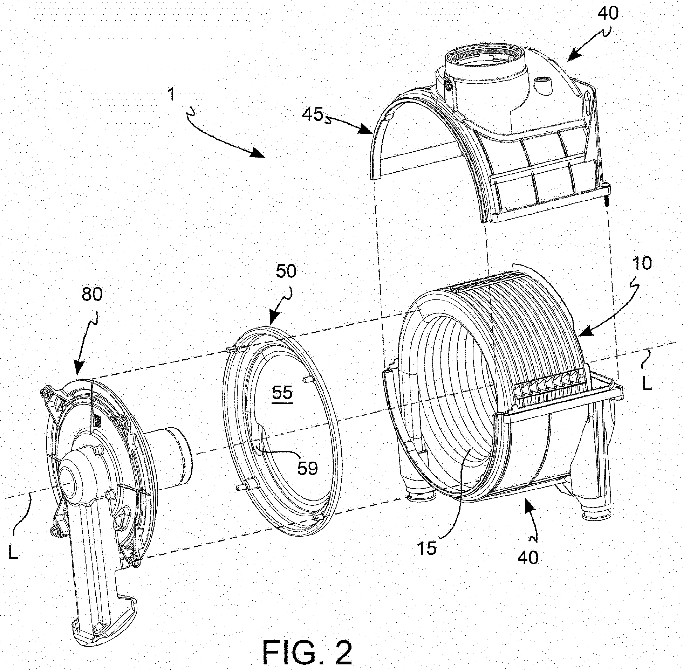

- figure 2 shows an exploded view of the heat exchange cell according to the invention;

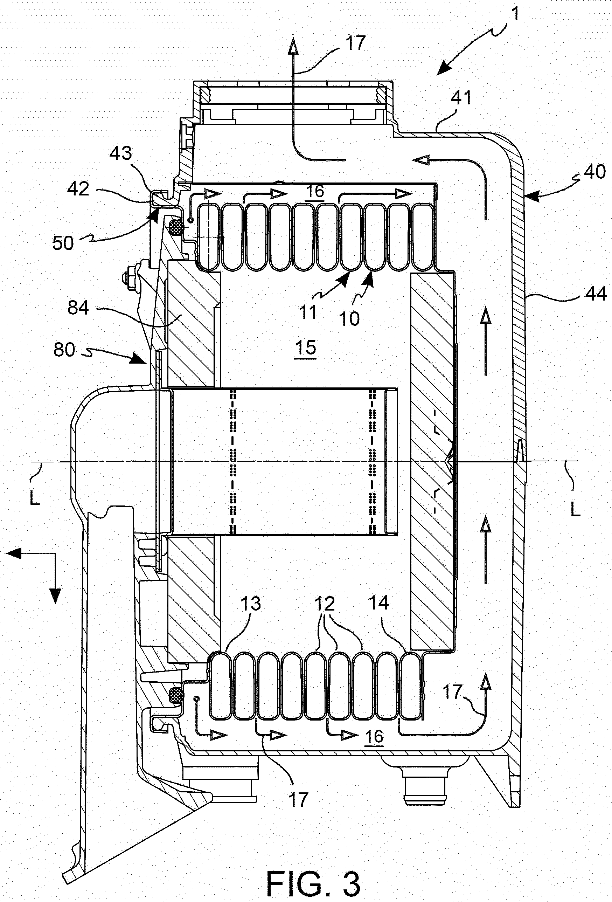

- figure 3 shows a sectional view of the heat exchange cell in figure 1, by means of a vertical longitudinal sectional plane containing the helix axis of the exchanger;

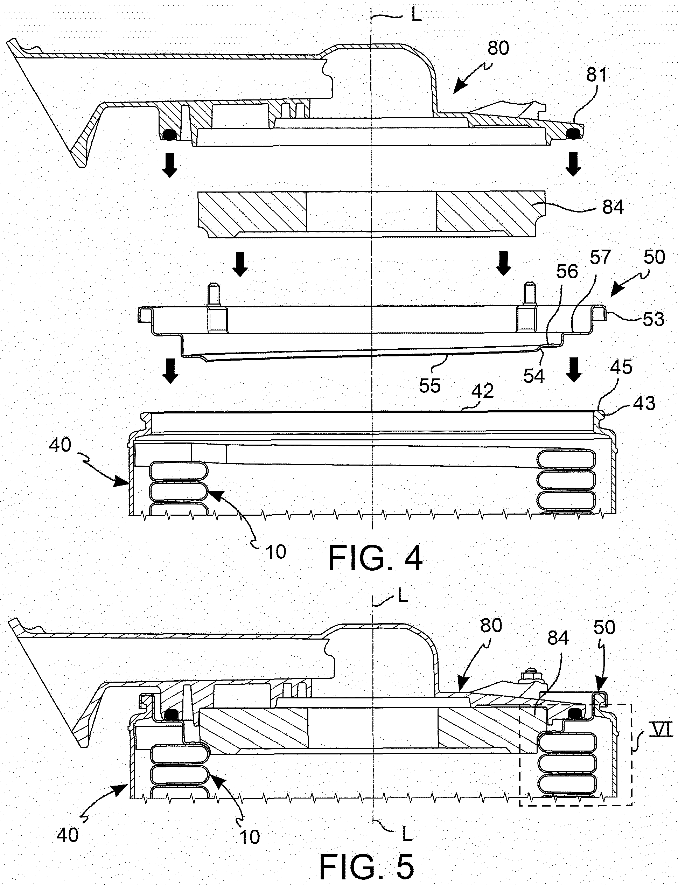

- figure 4 shows an exploded drawing of a portion of the sectional view in figure 3;
- figure 5 shows an assembled drawing of a portion of the sectional view in figure 3;

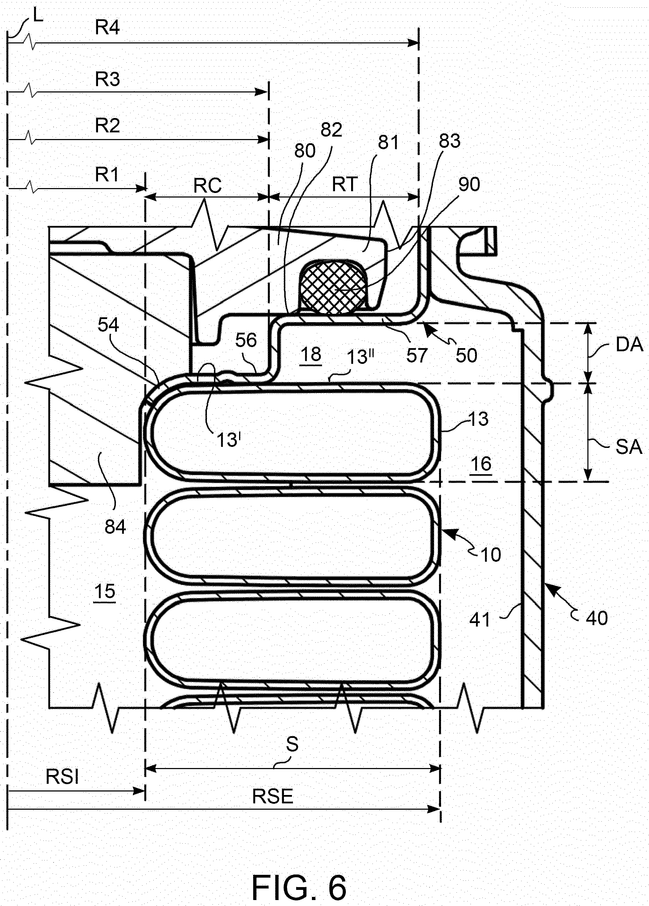

- figure 6 shows an enlarged detail of the sectional view of the assembled drawing;

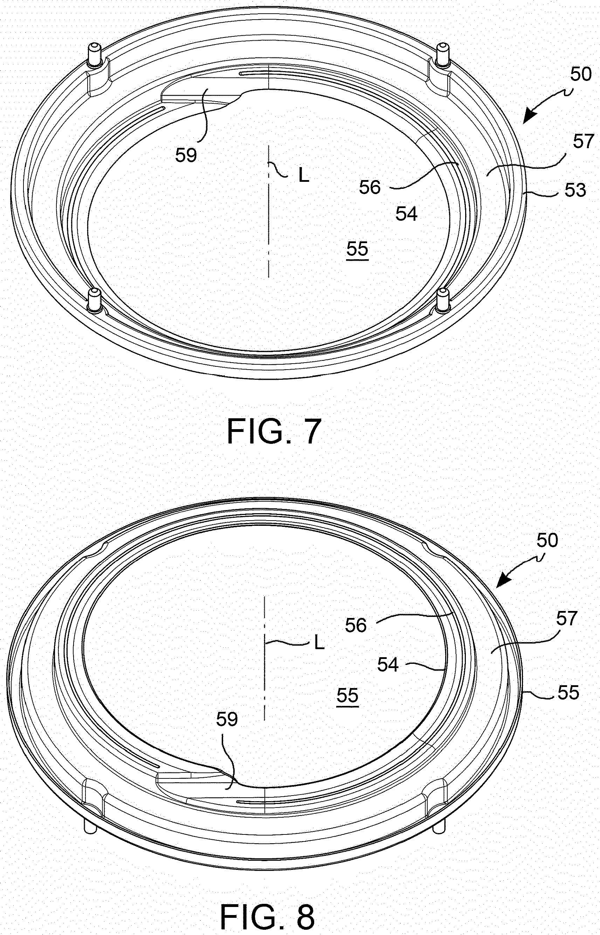

- figure 7 shows a perspective view from above of the closing flange;
- figure 8 shows a perspective view from below of the closing flange in figure 7;

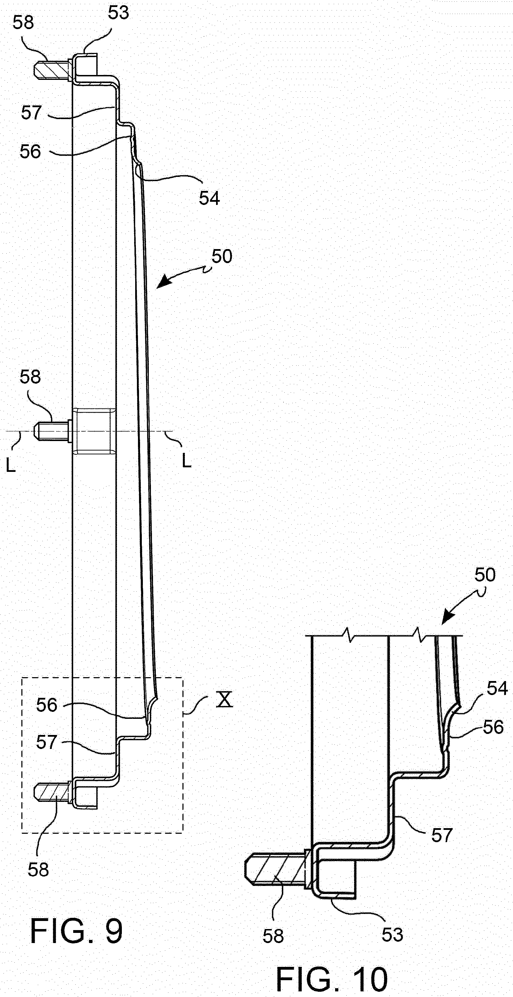

- figure 9 shows a sectional view of the closing flange in figure 7 by means of the vertical longitudinal sectional plane;
- figure 10 shows an enlarged detail of the sectional view in figure 9;
- figures 11, 12 and 13 show three sectional partial diagrammatic views, respectively, of three embodiments of the dimensions of the closing flange.

### Description of preferred embodiments

With reference to the figures, a heat exchange cell according to the invention for a heating condensing boiler is globally indicated by reference numeral 1.

Reference will be made below to "axial direction" or "axially" to indicate a direction parallel to the helix axis L-L, and to "radial direction" or "radially" to indicate a direction orthogonal to the helix axis L-L.

The heat exchange cell 1 comprises a heat exchanger 10, which comprises at least one tubular pipe 11 adapted to be traveled by a fluid to be heated and helically wound about a helix axis L-L according to a plurality of helix turns 12, 13, 14, and defining a free central space adapted to form a combustion chamber 15.

According to a preferred embodiment, the at least one tubular pipe 11 is helically wound, where said helix has a helix radius and a helix step, which are both constant.

Thereby, the heat exchanger 10 can have a generally substantially cylindrical outer shape, i.e. it can ideally be within an ideal cylinder coaxial to the helix axis L-L.

The at least one tubular pipe 11 ends with a first end helix turn 13 and an opposite last end helix turn 14, evaluated along said helix axis L-L.

According to an embodiment of the invention, for example, shown in the figures, the exchanger consists of only one tubular pipe 11.

The heat exchange cell 1 comprises a container casing 40 containing said heat exchanger 10 mounted therein.

The container casing 40 comprises a side casing wall 41 radially arranged outside, and about said heat exchanger 10, forming a fume collection chamber 16 radially interposed between the exchanger 10 and the side casing wall 41.

The fume collection chamber 16 is configured to receive the combustion fumes 17 generated in the combustion chamber 15 after said fumes 17 have transferred heat to said fluid to be heated in said at least one tubular pipe 11 passing through axial spaces between the adjoining helix turns from the combustion chamber to the fume collection chamber.

In fact, the helix pitch can be dimensioned so that a space remains, between each helix turn 12, 13, 14 and the adjoining helix turns, in an axial direction, i.e. so that the adjoining helix turns are not axially touching one another, and so that such a space allows the passage of the combustion fumes 17 from the combustion chamber 15 to the fume collection chamber 16.

According to an embodiment, the side casing wall 41 is arranged coaxially to the helix axis L-L. Preferably, the side casing wall 41 is substantially cylindrical and coaxial to the helix axis L-L.

The container casing 40 further defines a front casing end 45 comprising a casing opening 42 surrounded by an annular casing edge 43 having the center on said helix axis L-L.

The first end helix turn 13 of said plurality 12, 13, 14, is facing the front open end 42.

According to an embodiment, the annular casing edge 43 is circular shaped, preferably having an inner radius, which is substantially equal to, or greater than the outer radius of the exchanger 10.

According to an embodiment, the annular casing edge 43 is arranged, or lies on a plane orthogonal to the helix axis L-L.

According to an embodiment, the container casing 40 defines a rear closed end 44, opposite to the front end 45, where said last end helix turn is facing said rear closed end 44.

In other words, according to an embodiment, the container casing 40 is shell-shaped, comprising the side casing wall 41, which ends, at the front, with the casing opening defined in said front casing end 45, and, at the back, with a rear closed wall defining said rear closed end 44 of the casing.

According to an embodiment, the rear closed casing wall is substantially flat and orthogonal to the helix axis L-L.

The container casing 40 is touched by the combustion fumes only after they have transferred the heat thereof to the heat exchanger 10, therefore, the temperature of such fumes, in contact with the container casing 40, is significantly lower than the temperature of the combustion fumes in the combustion chamber 15, sometimes even 10 times lower. This allows making the container casing of a polymer material, e.g. polyethylene.

According to an embodiment, the temperature of the fumes in the combustion chamber 15 is about 850 °C, while the temperature of the fumes in the fume collection chamber 16, radially outside the exchanger 10, is about 85°C.

According to a possible embodiment, the container casing 40 can consist of two mutually assemblable half-shells.

Thereby, if the container casing 40 is made of a die-cast plastic polymer material, the removal thereof from the respective dies is simplified as a result of the undercuts.

The heat exchange cell 1 comprises an annular closing flange 50 arranged coaxially to said helix axis L-L defining a radially outer annular flange edge portion 53 and a radially inner annular flange edge portion 54 with respect to said helix axis L-L.

The radially outer annular flange edge portion 53 is continuously and sealingly coupled to said annular casing edge 43, and the radially inner annular flange edge portion 54 defines a central flange opening 55 for allowing access to the inside of the combustion chamber 15.

The closing flange 50 is made of sheet metal and is formed by molding in a single piece.

In other words, the closing flange 50 made of sheet metal consists of a single piece of a molded sheet metal, thus avoiding being formed by several mutually assembled pieces of sheet metal.

According to an embodiment, the closing flange made of a sheet metal 50 is entirely formed by molding in a single piece and is devoid of overlapping metal sheet portions according to an axial direction parallel to the helix axis L-L.

According to an embodiment, the closing flange made of sheet metal 50 is made of steel.

According to an embodiment, the closing flange 50 consists of a single layer of sheet, avoiding formation of overlapping sheet layers.

The closing flange 50 comprises an annular contact portion 56 coaxial to said helix axis L-L, said annular contact portion 56 being arranged in direct contact and sealingly with at least one corresponding annular portion 13' of the outer surface 13'' of said first end helix turn 13.

According to an embodiment, the annular contact portion has a preset radial width value RC.

In other words, the annular contact portion 56 is configured to continuously adhere to at least one corresponding annular portion 13' of the outer surface 13'' of said end helix turn 13.

The closing flange 50 comprises an annular sealing portion 57 coaxial to said helix axis L-L.

According to an embodiment, the closing flange 50 has a predetermined radial width value RT.

The heat exchange cell 1 comprises a removable closing door 80 configured to removably close said central flange opening 55 when said closing door 80 is tightened to said closing flange 50 in a closed position, said closing door 80 defining an annular door edge portion 81 configured to be coupled to said annular sealing portion 57 of said flange.

According to an embodiment, the heat exchange cell 1 comprises fixing means 58 for tightening the door 80 against the closing flange 50, where such fixing means 58 are fixed to the radially outer annular flange edge portion 53.

According to an embodiment, such fixing means for tightening the door 80 comprise threaded pins 58 arranged with the axis parallel to the helix axis L-L and having one end fixed to the radially outer annular flange edge portion 53, e.g. by means of welding.

Preferably, the door 80 comprises through holes corresponding to said threaded pins 58, said holes being configured to slidably accommodate said pins therein and allow tightening the door against the flange by screwing respective nuts to said threaded pins.

The annular sealing portion 57 of said closing flange 50 is arranged not in contact with, and detached from the outer surface 13'' of said first end helix turn 13 and delimits said fume collection chamber 16.

The annular sealing portion 57 is configured to prevent a contact with said first end helix turn 13 and to be touched by the combustion fumes 17 after said fumes have transferred heat to the fluid to be heated, and therefore at a low temperature.

According to an embodiment, the door 80 comprises a refractory disk 84 configured to be arranged coaxially to the helix axis L-L and facing the combustion chamber 15, in the closed position of said closing door 80.

The refractory disk 80 has such a shape as to adhere to the radially inner annular flange edge portion 54 and to compress such a radially inner annular flange edge portion 54 against said annular portion 13' of the outer surface 13'' of said first end helix turn 13, interposing said radially inner annular flange edge portion 54 between said refractory disk 80 and said first end helix turn 13, in the closed position of said closing door 80.

Thereby, the coupling between the refractory disk 80, the radially inner annular flange edge portion 54, and the first end helix turn, together form a first thermal barrier against the propagation of the heat from the combustion chamber 15 towards the annular sealing portion 57 of the closing flange 50.

Furthermore, such a coupling also contributes to forming a first seal for the fumes for preventing the combustion fumes at a high temperature, present in the combustion chamber 15, from directly reaching the annular sealing portion 57 from the outside of the closing flange 50, i.e. on the opposite side to the side facing the exchanger 10.

According to an embodiment, the annular door edge portion 81 comprises an annular abutment contact portion 82, configured to be placed in direct contact abutting against the annular sealing portion 57 of the closing flange 50 in the closed position of said closing door 80.

Thereby, the direct abutment contact between the annular abutment contact portion 82 and the annular sealing portion 57 allows transferring an amount of heat from the closing door 80 towards the annular sealing portion 57, which is cooled at a low temperature by the fumes 17 present in the fume collection chamber 16, which touch such an annular sealing portion 57.

Thereby, the temperature of the closing door 80 is kept at low values, generally no higher than 85°C.

The annular edge portion of the door 81 is delimited by an annular end edge 83 of the door.

According to an embodiment, the annular abutment contact portion 82 is radially interposed between the radially inner annular flange edge portion 54 and the annular end edge 83 of the door 80.

Thereby, the direct abutment contact between the annular abutment contact portion 82 and the annular sealing portion 57 forms a second thermal barrier radially interposed between the combustion chamber 15 and the annular edge portion of the door 81.

Such a second thermal barrier contributes to thermally protecting the annular edge portion of the door 81, between the annular abutment contact portion 82 and the annular end edge 83.

According to an embodiment, the heat exchange cell 1 comprises at least one gasket 90, or packing, adapted to be axially interposed and compressed between the annular sealing portion 57 of the flange 50 and the annular door edge portion 81 to form a seal for the fumes, to prevent the combustion fumes from exiting between the closing flange 50 and the closing door 80 in the closed position of said closing door 80.

According to an embodiment, the at least one gasket 90, or packing, is radially interposed between the annular abutment contact portion 82 and the annular end edge 83, therefore, radially outside said annular abutment contact portion 82.

Thereby, the seal 90, or packing, is positioned in a thermally protected area.

In fact, the gasket 90, or packing, is in contact with, and compressed between the annular edge portion 81 of the door 80 and the annular sealing portion 57 of the closing flange 50, both such two portions being kept at a reduced temperature, generally no higher than 85°C, due to the presence of the first and/or second thermal barrier described above.

This offers the advantage of being able to use a gasket or packing, which does not necessarily have elevated qualities of resistance to high temperatures, thus allowing using a gasket 90, or packing, having a cost, which is far more reduced than a gasket, or packing with elevated thermal resistance.

The annular sealing portion 57 of said closing flange 50 is arranged, at least partially, radially outside said annular contact portion 56, in a radial direction, orthogonal to the helix axis L-L.

Thereby, the annular sealing portion 57 is touched by the combustion fumes 16 on reaching the fume collection chamber 16, and, that is, after transferring heat to the liquid to be heated in the exchanger.

The temperature of such fumes does not exceed 85°C, therefore, it allows cooling the annular sealing portion 57 at a similar temperature value.

This also allows reducing the temperature detected on the closing door, and thus reducing the heat loss of the whole front wall of the cell.

The maximum temperatures detected on the door are, in fact, less than 90°C and reach a detected average of about 74°C. This contributes to raising the final output of the cell, with the advantage of reducing: the exchange surface with the same power output, the cell dimensions, the amount of material intended for the thermal exchange, and thus the costs.

The fact that the annular contact portion 56 is radially inside the annular sealing portion 57, also gives the further advantage of facilitating the forming process by molding and plastic deformation of the metal sheet, which slides more easily between the dies of the press where required and necessary.

This has enabled to mold a sheet metal having a reduced thickness, with optimum results, with a consequent further reduction in the production costs.

According to an embodiment, the annular sealing portion 57 of said closing flange 50 is arranged completely outside the annular contact portion 56, in a radial direction, orthogonal to the helix axis L-L.

In other words, the annular sealing portion 57 of said closing flange 50 extends, in a radial direction, orthogonal to the helix axis L-L, completely outside the annular contact portion 56.

According to an embodiment, the annular contact portion 56 and the annular sealing portion are arranged so as to avoid an overlapping therebetween in an axial direction parallel to the helix axis L-L.

In other words, the annular contact portion 56 extends in a radial direction between a first radius value R1 and a second radius value R2, which is greater than the first radius value R1, and the annular sealing portion extends in a radial direction between a third radius value R3 and a fourth radius value R4, which is greater than the third radius value R3, where the third radius value R3 is greater than, or equal to the second radius value R2.

According to an embodiment, a portion of said fume collection chamber 16 forms an annular flange cooling chamber 18 axially interposed between said outer surface 13'' of said first end helix turn 13 and said annular sealing portion 57 of said closing flange 50, said annular flange cooling chamber 18 being at least partially delimited by said outer surface 13'' of said first end helix turn 13 and by said annular sealing portion 57 of said closing flange 50.

According to an embodiment, the value of the radial width RC of the annular contact portion 56 is less than, or equal to the value of the radial width S of the pipe of the first helix turn 13, evaluated according to a radial direction R orthogonal to the helix axis L-L.

According to an embodiment, the sum between the radial width value RC of the annular contact portion 56 and the radial width value RT of the annular sealing portion 57, evaluated according to a radial direction R orthogonal to the helix axis L-L, is greater than, or equal to the radial width value S of the pipe of the first helix turn 13.

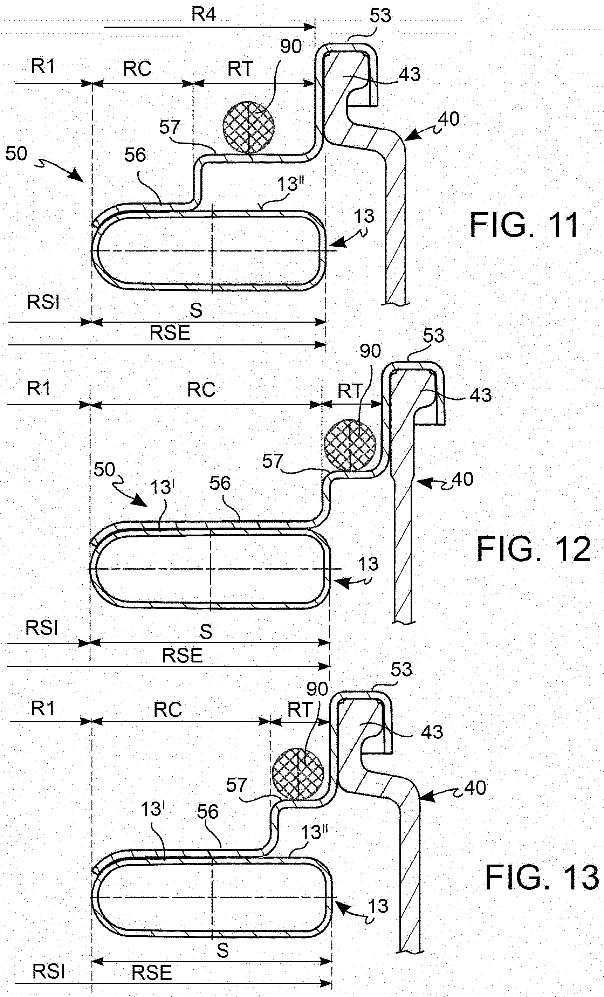

Figures 11, 12 and 13 show three possible embodiments, respectively, of the dimensions of the closing flange 50.

In particular, figure 11 describes an embodiment, where the sum between the radial width value RC of the annular contact portion 56 and of the radial width value RT of the annular sealing portion 57 is equal to the radial width value S of the pipe of the first helix turn 13, thus, the radial width value RC of the annular contact portion and the radial width value RT of the annular sealing portion are both lower than the radial width value S of the pipe of the first helix turn 13, and furthermore, the radial width value RC of the annular contact portion is less than the radial width value RT of the annular sealing portion.

Figure 12 describes an embodiment, where the sum between the radial width value RC of the annular contact portion 56 and of the radial width value RT of the annular sealing portion 57 is greater than the radial width value S of the pipe of the first helix turn 13, and where the radial width value RC of the annular contact portion 56 is equal to the radial width value S of the pipe of the first helix turn 13, and where the radial width value RC of the annular contact portion is greater than the radial width value RT of the annular sealing portion.

Figure 13 shows an embodiment, where the sum between the radial width value RC of the annular contact portion 56 and of the radial width value RT of the annular sealing portion 57 is equal to the radial width value S of the pipe of the first helix turn 13, thus, the radial width value RC of the annular contact portion and the radial width value RT of the annular sealing portion are both lower than the radial width value S of the pipe of the first helix turn 13, and furthermore, the radial width value RC of the annular contact portion is greater than the radial width value RT of the annular sealing portion.

According to an embodiment, the radial width value RC of the annular contact portion 56 is less than the radial width value RT of the annular sealing portion 57.

Preferably, the radial width value RT of the annular sealing portion 57 is dimensioned to ensure an annular contact surface, which is adapted to form a seal with the gasket 90, or packing.

According to an embodiment, the radial width value RC of the annular contact portion 56 is no greater than 2/3 of the radial width value S of the pipe of the first helix turn 13, or again, more preferably, no greater than 1/2 of the radial width value S of the pipe of the first helix turn 13.

This precaution allows cooling the annular sealing portion 57 of the flange in a reduced and well-defined space.

An annular contact portion 56 having a limited radial width offers greater elasticity and bending for coupling between the flange 50 and the first end helix turn 13, which is best suited to the variables dictated by the tolerances of the machining, curvature and molding of the sheet, forming the flange.

According to an embodiment, a sealing material is interposed between the annular contact portion 56 and the outer surface of the first end helix turn 13'' to ensure isolating the combustion chamber 15 from the fume collection chamber 16.

According to an embodiment, the pipe of the first helix turn 13 extends in a radial direction R, orthogonal to the helix axis L-L, between a minimum inner radius value RSI and a maximum outer radius value RSE, and where the annular contact portion 56 extends, in the radial direction R, substantially from said minimum inner radius value RSI outwards.

According to an embodiment, the annular sealing portion 57 is flat, preferably lying on a plane orthogonal to the helix axis L-L, and it is axially spaced apart from the outer surface 13'' of the first end helix turn 13 over the entire circumferential extension of said annular sealing portion 57.

According to an embodiment, the value of the axial distance DA, evaluated according to an axial direction, parallel to the helix axis L-L, between the annular sealing portion 57 and the outer surface 13'' of the first end helix turn 13 is dimensioned to allow the combustion fumes 17 exiting the exchanger 10 and collected in the fume collection chamber 16, to touch the annular sealing portion 57.

According to a preferred embodiment, the maximum value and the minimum value of the axial distance DA are dimensioned so that the minimum value of the axial distance DA is greater than, or equal, to zero and the maximum value of the axial distance DA is greater than, or equal, to the thickness SA of the first end helix turn 13, evaluated according to an axial direction, parallel to the helix axis L-L.

According to an embodiment, the heat exchange cell 1, comprises an annular sealing gasket for the fumes 90, which is axially interposed and compressed between the annular sealing portion 57 and the annular door edge portion 81 to prevent the combustion fumes from exiting between the closing flange 50 and the closing door 80.

According to an embodiment, the annular contact portion 56 is shaped according to one turn of an helicoid about said helix axis (L-L) connected to the ends thereof by means of a step portion 59, so that said annular contact portion 56 adheres to the outer surface 13'' of the first end helix turn 13.

According to an embodiment, the radially inner annular flange edge portion 54 has a curved shape connected towards the inside of the combustion chamber 15 according to the curvature of the outer surface 13'' of the end helix turn 13 so as to adhere thereto.

According to an embodiment, the annular contact portion 56 extends in a radial direction R, orthogonal to the helix axis L-L, from the radially inner annular flange edge portion 54 towards the radially outer flange edge portion 53.

According to an embodiment, the annular sealing portion 57 extends in a radial direction R, orthogonal to the helix axis L-L, from the radially outer annular flange edge portion 53 towards the radially inner annular flange edge portion 54.

Those skilled in the art may make changes and adaptations to the embodiments of the device described above, or replace elements with others which are functionally equivalent in order to meet contingent needs without departing from the scope of the following claims.

Each of the features described as belonging to a possible embodiment may be implemented irrespective of the other embodiments described.

It is worth noting that the figures are not necessarily to scale.

All the features described herein and/or any step of the method described herein may be combined in any combination, except for the combinations in which at least some of such features and/or steps are mutually exclusive and as long as within the scope of the claims.

## Claims

1. A heat exchange cell (1) for a heating condensing boiler, comprising:
- a heat exchanger (10) comprising at least one tubular pipe (11) adapted to be traveled by a fluid to be heated, helically wound about a helix axis (L-L) according to a plurality of helix turns (12, 13, 14), and defining a free central space configured to form a combustion chamber (15), said heat exchanger (10) ending with a first end helix turn (13) and an opposite last end helix turn (14) evaluated along said helix axis (L-L);
- a container casing (40) containing said heat exchanger (10) mounted therein, comprising a side casing wall (41) arranged radially outside and about said heat exchanger (10) forming a fume collection chamber (16) radially interposed between said exchanger (10) and said side casing wall (41) adapted to receive combustion fumes (17) generated in the combustion chamber (15) once said fumes (17) have transferred an amount of heat to said fluid to be heated in said at least one tubular pipe (11), said container casing (40) further defining a front casing end (45) comprising a casing opening (42) surrounded by an annular casing edge (43) having the center on said helix axis (L-L), wherein said first end helix turn (13) of said plurality of helix turns (12, 13, 14) faces said casing opening (42);
- an annular closing flange (50) arranged coaxial to said helix axis (L-L) defining a radially outer annular flange edge portion (53) and a radially inner annular flange edge portion (54) with respect to said helix axis (L-L), the radially outer annular flange edge portion (53) being continuously and sealingly coupled to said annular casing edge (43), and the radially inner annular flange edge portion (54) defining a central flange opening (55) for allowing access inside the combustion chamber (15);
- and wherein said closing flange (50) comprises an annular contact portion (56) coaxial to said helix axis (L-L), said annular contact portion (56) being sealingly arranged in direct contact with at least one corresponding annular portion (13') of the outer surface (13") of said first end helix turn (13);
- and wherein said closing flange (50) comprises an annular sealing portion (57) coaxial to said helix axis (L-L);
- a removable closing door (80) configured to removably close said central flange opening (55) when said closing door (80) is tightened to said closing flange (50) in a closed position, said closing door (80) defining an annular door edge portion (81) configured to be coupled to said annular sealing portion (57) of said flange;
- wherein said annular sealing portion (57) of said closing flange (50) is arranged not in contact with, and detached from, the outer surface (13'') of said first end helix turn (13) and delimits, in part, said fume collection chamber (16); and
- wherein said annular sealing portion (57) of said closing flange (50) is arranged, at least in part, radially outside said annular contact portion (56), according to a radial direction orthogonal to the helix axis (L-L),
**characterized in that**:
- said closing flange (50) is made of a sheet metal and is entirely formed by molding in a single piece.

2. A heat exchange cell (1) according to claim 1, wherein a portion of said fume collection chamber (16) forms an annular flange cooling chamber (18) axially interposed between said outer surface (13'') of said first end helix turn (13) and said annular sealing portion (57) of said closing flange (50), said annular flange cooling chamber (18) being at least in part delimited by said outer surface (13'') of said first end helix turn (13) and by said annular sealing portion (57) of said closing flange (50).

3. A heat exchange cell (1) according to claim 1 or 2, wherein the annular contact portion (56) extends in a radial direction between a first radius value (R1) and a second radius value (R2), which is greater than the first radius value (R1), and the annular sealing portion extends in a radial direction between a third radius value (R3) and a fourth radius value (R4), which is greater than the third radius value (R3), wherein the third radius value (R3) is greater than or equal to the second radius value (R2).

4. A heat exchange cell (1) according to at least one preceding claim, wherein the value of the radial width (RC) of the annular contact portion (56) is less than or equal to the value of the radial width (S) of the pipe of the first helix turn (13), evaluated according to a radial direction (R) orthogonal to the helix axis (L-L).

5. A heat exchange cell (1) according to at least one preceding claim, wherein the sum of the value of the radial width (RC) of the annular contact portion (56) and the value of the radial width (RT) of the annular sealing portion (57), evaluated according to a radial direction (R) orthogonal to the helix axis (L-L), is greater than or equal to the value of the radial width (S) of the pipe of the first helix turn (13).

6. A heat exchange cell (1) according to at least one preceding claim, wherein the pipe of the first helix turn (13) extends, according to a radial direction (R) orthogonal to the helix axis (L-L), between a minimum inner radius value (RSI) and a maximum outer radius value (RSE), and wherein the annular contact portion (56) extends, according to the radial direction (R), substantially starting from said minimum inner radius value (RSI) outwards.

7. A heat exchange cell (1) according to at least one preceding claim, wherein the annular sealing portion (57) is axially spaced apart from the outer surface (13") of the first end helix turn (13) over the entire circumferential extension of said annular sealing portion (57).

8. A heat exchange cell (1) according to claim 7, wherein the minimum value of the axial distance between the annular sealing portion (57) and the outer surface (13") of the first end helix turn (13) is dimensioned so as to allow the combustion fumes exiting the exchanger (10) and collected in the fume collection chamber (16) to touch the annular sealing portion (57).

9. A heat exchange cell (1) according to at least one preceding claim, wherein the annular contact portion (56) is shaped according to one turn of a helicoid about said helix axis (L-L) connected to the ends thereof by means of a step portion (59), so that said annular contact portion (56) adheres to the outer surface (13'') of the first end helix turn (13).

10. A heat exchange cell (1) according to at least one preceding claim, wherein the annular sealing portion (57) has a flat shape lying on a plane orthogonal to the helix axis (L-L).

11. A heat exchange cell (1) according to at least one preceding claim, wherein the annular contact portion (56) comprises said radially inner annular flange edge portion (54), and wherein said radially inner annular flange edge portion (54) has a curved shape joined towards the inside of the combustion chamber (15) according to the curvature of the outer surface (13") of the end helix turn (13) so as to adhere thereto.

12. A heat exchange cell (1) according to claim 11, wherein the closing door (80) comprises a refractory disk (84) configured to be arranged coaxial to the helix axis (L-L) and facing the combustion chamber (15), in the closed position of said closing door (80), wherein said refractory disk (80) has such a shape as to adhere to the radially inner annular flange edge portion (54) and to compress such a radially inner annular flange edge portion (54) against said annular portion (13') of the outer surface (13'') of said first end helix turn (13), interposing said radially inner annular flange edge portion (54) between said refractory disk (84) and said first end helix turn (13), in the closed position of said closing door (80).

13. A heat exchange cell (1) according to at least one preceding claim, wherein the annular door edge portion (81) comprises an annular abutment contact portion (82), configured to be placed abuttingly in direct contact against said annular sealing portion (57) of the closing flange (50), in the closed position of said closing door (80).

14. A heat exchange cell (1) according to claim 13, wherein the annular door edge portion (81) is delimited by an annular end edge (83) of the door, and wherein the annular abutment contact portion (82) is radially interposed between the radially inner annular flange edge portion (54) and the annular end edge (83) of the door (80).

15. A heat exchange cell (1) according to at least one preceding claim, wherein the heat exchange cell (1) comprises at least one gasket (90), or packing, adapted to be axially interposed and compressed between the annular sealing portion (57) of the flange (50) and the annular door edge portion (81).

16. A heat exchange cell (1) according to claims 14 and 15, wherein the at least one gasket (90), or packing, is radially interposed between the annular abutment contact portion (82) and the annular end edge (83) of the door, and/or radially outside said annular abutment contact portion (82).

17. A heat exchange cell (1) according to at least one preceding claim, wherein the closing flange (50) is devoid of overlapping metal sheet portions according to an axial direction parallel to the helix axis (L-L).

18. A heat exchange cell (1) according to at least one preceding claim, comprising fixing means (58) for tightening the door (80) against the closing flange (50), wherein such fixing means (58) are fixed to the radially outer annular flange edge portion (53).

## Patentansprüche

1. Wärmetauschzelle (1) für einen Heizkondensationskessel, umfassend:
- einen Wärmetauscher (10) umfassend mindestens ein rohrförmiges Rohr (11), das dazu geeignet ist, von einem zu erwärmenden Fluid durchströmt zu werden, gemäß mehreren Spiralwindungen (12, 13, 14) spiralförmig um eine Spiralachse (L-L) gewunden ist, und einen freien mittigen Raum definiert, welcher dazu ausgebildet ist, eine Brennkammer (15) zu bilden, wobei der Wärmetauscher (10), entlang der Spiralachse (L-L) gesehen, in einer ersten End-Spiralwindung (13) und einer entgegengesetzten letzten End-Spiralwindung (14) endet;
- ein Behältergehäuse (40), das den darin montierten Wärmetauscher (10) enthält, und eine Gehäuseseitenwand (41) umfasst, welche radial außerhalb und um den Wärmetauscher (10) angeordnet ist, wobei sie eine radial zwischen dem Tauscher (10) und der Gehäuseseitenwand (41) angeordnete Abgassammelkammer (16) bildet, welche geeignet ist, in der Brennkammer (15) erzeugte Verbrennungsabgase (17) aufzunehmen, sobald diese Abgase (17) eine Wärmemenge an das zu erwärmende Fluid in dem mindestens einen rohrförmigen Rohr (11) übertragen haben, wobei das Behältergehäuse (40) ferner ein vorderes Gehäuseende (45) mit einer Gehäuseöffnung (42) definiert, welche von einem ringförmigen Gehäuserand (43) umgeben ist, dessen Mittelpunkt auf der Spiralachse (L-L) liegt, wobei die erste End-Spiralwindung (13) der mehreren Spiralwindungen (12, 13, 14) der Gehäuseöffnung (42) zugewandt ist;
- einen koaxial zu der Spiralachse (L-L) angeordneten ringförmigen Schließflansch (50), welcher einen radial äußeren ringförmigen Flanschrandbereich (53) und einen radial inneren ringförmigen Flanschrandbereich (54) in Bezug auf die Spiralachse (L-L) definiert, wobei der radial äußere ringförmige Flanschbereich (53) durchgehend und dichtend mit dem ringförmigen Gehäuserand (43) gekoppelt ist, und der radial innere ringförmige Flanschbereich (54) eine mittige Flanschöffnung (55) bildet, um den Zugang zum Inneren der Brennkammer (15) zu ermöglichen;
- und wobei der Schließflansch (50) einen zu der Spiralachse (L-L) koaxialen ringförmigen Kontaktbereich (56) aufweist, wobei der ringförmige Kontaktbereiche (56) dichtend in direktem Kontakt mit mindestens einem entsprechenden ringförmigen Bereich (13') der Außenfläche (13") der ersten End-Spiralwindung (13) ist;
- und wobei der Schließflansch (50) einen zu der Spiralachse (L-L) koaxialen ringförmigen Dichtbereich (57) aufweist;
- eine entfernbare Schließtür (80), welche dazu ausgebildet ist, die mittige Flanschöffnung (55) zu schließen, wenn die Schließtür (80) an dem Schließflansch (50) in einer geschlossenen Position befestigt ist, wobei die Schließtür (80) einen ringförmigen Türrandbereich (81) aufweist, welcher dazu ausgebildet ist, mit dem ringförmigen Dichtbereich (57) des Flanschs gekoppelt zu werden;
- wobei der ringförmige Dichtbereich (57) des Schließflanschs (50) nicht in Kontakt mit und von der Außenfläche (13") der ersten End-Spiralwindung (13) gelöst angeordnet ist und die Abgassammelkammer (16) teilweise begrenzt; und
- wobei der ringförmige Dichtbereich (57) des Schließflanschs (50) gemäß einer zu der Spiralachse (L-L) orthogonalen Richtung zumindest teilweise radial außerhalb des ringförmigen Kontaktbereichs (56) angeordnet ist,
**dadurch gekennzeichnet, dass**
- der Schließflansch (50) aus einem Metallblech besteht und vollständig durch Formen als ein einziges Teil gebildet ist.

2. Wärmetauschzelle (1) nach Anspruch 1, bei welcher ein Bereich der der Abgassammelkammer (16) eine ringförmige Flanschkühlkammer (18) bildet, welche axial zwischen der Außenfläche (13") der ersten End-Spiralwindung (13) und dem ringförmigen Dichtbereich (57) des Schließflanschs (50) angeordnet ist, wobei die ringförmige Flanschkühlkammer (18) zumindest teilweise durch die Außenfläche (13") der ersten End-Spiralwindung (13) und durch den ringförmigen Dichtbereich (57) des Schließflanschs (50) begrenzt ist.

3. Wärmetauschzelle (1) nach Anspruch 1 oder 2, bei welcher sich der ringförmige Kontaktbereich (56) in einer radialen Richtung zwischen einem ersten Radiuswert (R1) und einem zweiten Radiuswert (R2) erstreckt, welcher größer als der erste Radiuswert (R1) ist, und sich der ringförmige Dichtbereich in einer radialen Richtung zwischen einem dritten Radiuswert (R3) und einem vierten Radiuswert (R4) erstreckt, welcher größer als der dritte Radiuswert (R3) ist, wobei der dritte Radiuswert (R3) größer als oder gleich dem zweiten Radiuswert (R2) ist.

4. Wärmetauschzelle (1) nach mindestens einem vorangehenden Anspruch, bei welcher der Wert der radialen Weite (RC) des ringförmigen Kontaktbereichs (56), in radialer Richtung (R) orthogonal zu der Spiralachse (L-L) betrachtet, geringer als oder gleich dem Wert der radialen Weite (S) des Rohrs der ersten Spiralwindung (13) ist.

5. Wärmetauschzelle (1) nach mindestens einem vorangehenden Anspruch, bei welcher die Summe des Werts der radialen Weite (RC) des ringförmigen Kontaktbereichs (56) und des Werts der radialen Weite (RT) des ringförmigen Dichtbereichs (57), in radialer Richtung (R) orthogonal zu der Spiralachse (L-L) betrachtet, größer als oder gleich dem Wert der radialen Weite (S) des Rohrs der ersten Spiralwindung (13) ist.

6. Wärmetauschzelle (1) nach mindestens einem vorangehenden Anspruch, bei welcher sich das Rohr der ersten Spiralwindung (13), in radialer Richtung (R) orthogonal zu der Spiralachse (L-L) betrachtet, zwischen einem minimalen Innenradiuswert (RSI) und einem maximalen Außenradiuswert (RSE) erstreckt, und wobei sich der ringförmige Kontaktbereich (56) in der radialen Richtung (R) im Wesentlichen von dem minimalen Innenradiuswert (RSI) nach außen erstreckt.

7. Wärmetauschzelle (1) nach mindestens einem vorangehenden Anspruch, bei welcher der ringförmige Dichtbereich (57) von der Außenfläche (13") der ersten End-Spiralwindung (13) über die gesamte Umfangserstreckung des ringförmigen Dichtbereichs (57) axial beabstandet ist.

8. Wärmetauschzelle (1) nach Anspruch 7, bei welcher der minimale Wert des axialen Abstands zwischen dem ringförmigen Dichtbereich (57) und der Außenfläche (13") der ersten End-Spiralwindung (13) derart bemessen ist, dass er den aus dem Tauscher (10) austretenden und in der Abgassammelkammer (16) gesammelten Verbrennungsabgasen ermöglicht, den ringförmigen Dichtbereich (57) zu berühren.

9. Wärmetauschzelle (1) nach mindestens einem vorangehenden Anspruch, bei welcher der ringförmige Kontaktbereich (56) entsprechend einer Windung einer Schraubenlinie um die Spiralachse (L-L) geformt ist, die mit den Enden desselben durch einen Stufenbereich (59) verbunden ist, so dass der ringförmige Kontaktbereich (56) an der Außenfläche (13") der ersten End-Spiralwindung (13) haftet.

10. Wärmetauschzelle (1) nach mindestens einem vorangehenden Anspruch, bei welcher der ringförmige Dichtbereich (57) eine erste Form aufweist, welche auf einer zu der Spiralachse (L-L) orthogonalen Ebene liegt.

11. Wärmetauschzelle (1) nach mindestens einem vorangehenden Anspruch, bei welcher der ringförmige Kontaktbereich (56) den radial inneren ringförmigen Flanschrandbereich (54) umfasst, und wobei der radial innere ringförmige Flanschrandbereich (54) eine gebogene Fläche aufweist, die gemäß der Krümmung der Außenfläche (13") der End-Spiralwindung (13) verbunden ist, um daran zu haften.

12. Wärmetauschzelle (1) nach Anspruch 11, bei welcher die Schließtür (80) eine hitzebeständige Scheibe (84) umfasst, die dazu ausgebildet ist, in der geschlossenen Position der Schließtür (80) koaxial zu der Spiralachse (L-L) und der Brennkammer (15) zugewandt angeordnet zu sein, wobei die hitzebeständige Scheibe (80) eine Form aufweist, um an dem radial inneren ringförmigen Flanschrandbereich (54) zu haften und einen derartigen radial inneren ringförmigen Flanschrandbereich (54) gegen den ringförmigen Bereich (13') der Außenfläche (13") der ersten End-Spiralwindung (13) zu drücken, wobei der radial innere ringförmige Flanschrandbereich (54) in der geschlossenen Position der Schließtür (80) zwischen der hitzebeständigen Scheibe (84) und der ersten End-Spiralwindung (13) angeordnet ist.

13. Wärmetauschzelle (1) nach mindestens einem vorangehenden Anspruch, bei welcher der ringförmige Türrandbereich (81) einen ringförmigen Anlagekontaktbereich (82) umfasst, der dazu ausgebildet ist, in der geschlossenen Position der Schließtür (80) in direktem Kontakt an dem ringförmigen Dichtbereich (57) des Schließflanschs (50) anliegend angeordnet zu werden.

14. Wärmetauschzelle (1) nach Anspruch 13, bei welcher der ringförmige Türrandbereich (81) durch einen ringförmigen Endrand (83) der Tür begrenzt ist, und wobei der ringförmige Anlagekontaktbereich (82) radial zwischen dem radial inneren ringförmigen Flanschrandbereich (54) und dem ringförmigen Endrand (83) der Tür (80) angeordnet ist.

15. Wärmetauschzelle (1) nach mindestens einem vorangehenden Anspruch, bei welcher die Wärmetauschzelle (1) mindestens eine Dichtung (90) oder Packung umfasst, welche geeignet ist, axial zwischen dem ringförmigen Dichtbereich (57) des Flanschs (50) und dem ringförmigen Türrandbereich (81) angeordnet und zusammengedrückt zu werden.

16. Wärmetauschzelle (1) nach den Ansprüchen 14 und 15, bei welcher die mindestens eine Dichtung (90) oder Packung radial zwischen dem ringförmigen Anlagekontaktbereich (82) und dem ringförmigen Endrand (83) der Tür und/oder radial außerhalb des ringförmigen Anlagekontaktbereichs (82) angeordnet ist.

17. Wärmetauschzelle (1) nach mindestens einem vorangehenden Anspruch, bei welcher der Schließflansch (50) in einer zu der Spiralachse (L-L) parallelen axialen Richtung frei von überlappenden Metallblechbereichen ist.

18. Wärmetauschzelle (1) nach mindestens einem vorangehenden Anspruch, umfassend Befestigungsmittel (58) zum Verspannen der Tür (80) gegen den Schließflansch (50), wobei derartige Befestigungsmittel (58) an dem radial äußeren ringförmigen Flanschrandbereich (53) befestigt sind.

## Revendications

1. Cellule d'échange de chaleur (1) pour une chaudière à condensation, comprenant :
- un échangeur de chaleur (10) comprenant au moins une conduite tubulaire (11) apte à être traversée par un fluide à chauffer, enroulée en hélice autour d'un axe d'hélice (L-L) en une pluralité de spires d'hélice (12, 13, 14), et définissant un espace central libre configuré pour former une chambre de combustion (15), ledit échangeur de chaleur (10) terminant avec une première spire d'hélice d'extrémité (13) et une dernière spire d'hélice d'extrémité opposée (14) évalué le long dudit axe d'hélice (L-L);
- un carter de conteneur (40) contenant ledit échangeur de chaleur (10) monté làdedans, comprenant une paroi de carter latérale ( 41) disposée radialement à l'extérieur et autour dudit échangeur de chaleur (10), formant une chambre de collecte de fumée (16) radialement interposée entre ledit échangeur (10) et ladite paroi de carter latérale (41), apte à recevoir les fumées de combustion (17) générées dans la chambre de combustion (15) une fois que lesdites fumées (17) ont transféré une quantité de chaleur audit fluide à chauffer dans ladite au moins une conduite tubulaire (11), ledit carter de conteneur (40) définissant en outre une extrémité de carter avant (45) comprenant une ouverture de carter (42) entourée par un bord de carter annulaire (43) dont le centre est sur ledit axe d'hélice (L-L), dans laquelle ladite première spire d'hélice d'extrémité (13) de ladite pluralité de spires d'hélice (12, 13, 14) est en face de l'ouverture de carter (42) ;
- une bride de fermeture annulaire (50) disposée coaxialement audit axe d'hélice (L-L) définissant une partie de bord de bride annulaire radialement extérieure (53) et une partie de bord de bride annulaire radialement intérieure (54) par rapport audit axe d'hélice (L-L), la partie de bord de bride annulaire radialement extérieure (53) étant couplée de manière continue et étanche audit bord de carter annulaire (43), et la partie de bord de bride annulaire radialement intérieure (54) définissant une ouverture de bride centrale (55) pour permettre l'accès à l'intérieur de la chambre de combustion (15) ;
- et dans laquelle ladite bride de fermeture (50) comprend une partie de contact annulaire (56) coaxiale audit axe d'hélice (L-L), ladite partie de contact annulaire (56) étant disposée de manière étanche en contact direct avec au moins un partie annulaire correspondante (13') de la surface extérieure (13") de ladite première spire d'hélice d'extrémité (13) ;
- et dans laquelle ladite bride de fermeture (50) comprend une partie d'étanchéité annulaire (57) coaxiale audit axe d'hélice (L-L) ;
- une porte de fermeture amovible (80) configurée pour fermer de manière amovible ladite ouverture de bride centrale (55) lorsque ladite porte de fermeture (80) est serrée sur ladite bride de fermeture (50) dans une position fermée, ladite porte de fermeture (80) définissant une partie de bord de porte annulaire (81) configurée pour être couplée à ladite partie d'étanchéité annulaire (57) de ladite bride ;
- dans laquelle ladite partie d'étanchéité annulaire (57) de ladite bride de fermeture (50) est disposée sans contact avec, et détachée de, la surface extérieure (13") de ladite première spire d'hélice d'extrémité (13) et délimite, en partie, ladite chambre de collecte de fumées (16) ; et
- dans laquelle ladite partie annulaire de scellage (57) de ladite bride de fermeture (50) est arrangée, au moins en partie, radialement à l'extérieur de ladite partie de contact annulaire (56), dans une direction radiale orthogonale à l'axe d'hélice (L-L),
**caractérisée en ce que**:
- ladite bride de fermeture (50) est faite d'une feuille de métal et est entièrement formée par moulage en une seule pièce.

2. Cellule d'échange de chaleur (1) selon la revendication 1, dans laquelle une partie de ladite chambre de collecte de fumées (16) forme une chambre de refroidissement à bride annulaire (18) interposée axialement entre ladite surface extérieure (13") de ladite première spire d'hélice d'extrémité (13) et ladite partie d'étanchéité annulaire (57) de ladite bride de fermeture (50), ladite chambre de refroidissement à bride annulaire (18) étant au moins en partie délimitée par ladite surface extérieure (13") de ladite première spire d'hélice d'extrémité (13) et par ladite partie d'étanchéité annulaire (57) de ladite bride de fermeture (50).

3. Cellule d'échange de chaleur (1) selon la revendication 1 ou 2, dans laquelle la partie de contact annulaire (56) s'étend dans une direction radiale entre une première valeur de rayon (R1) et une deuxième valeur de rayon (R2) qui est supérieure à la première valeur de rayon (R1), et la partie d'étanchéité annulaire s'étend dans une direction radiale entre une troisième valeur de rayon (R3) et une quatrième valeur de rayon (R4) qui est supérieure à la troisième valeur de rayon (R3), dans laquelle la troisième valeur de rayon (R3) est supérieure ou égale à la deuxième valeur de rayon (R2).

4. Cellule d'échange de chaleur (1) selon au moins une revendication précédente, dans laquelle la valeur de la largeur radiale (RC) de la partie de contact annulaire (56) est inférieure ou égale à la valeur de la largeur radiale (S) de la conduite de la première spire d'hélice (13), évaluée selon une direction radiale (R) orthogonale à l'axe d'hélice (L-L).

5. Cellule d'échange de chaleur (1) selon au moins une revendication précédente, dans laquelle la somme de la valeur de la largeur radiale (RC) de la partie de contact annulaire (56) et de la valeur de la largeur radiale (RT) de la partie d'étanchéité annulaire (57), évaluée selon une direction radiale (R) orthogonale à l'axe de l'hélice (L-L), est supérieure à ou égale à la valeur de la largeur radiale (S) de la conduite de la première spire d'hélice (13).

6. Cellule d'échange de chaleur (1) selon au moins une revendication précédente, dans laquelle la conduite de la première spire d'hélice (13) s'étend, selon une direction radiale (R) orthogonale à l'axe d' hélice (L-L), entre une valeur de rayon intérieur minimum (RSI) et une valeur extérieure maximum (RSE), et dans laquelle la partie de contact annulaire (56) s'étend, selon la direction radiale (R), essentiellement à partir de ladite valeur de rayon intérieur minimum (RSI) vers l'extérieur.

7. Cellule d'échange de chaleur (1) selon au moins une revendication précédente, dans laquelle la partie d'étanchéité annulaire (57) est espacée axialement de la surface extérieure (13") de la première spire d'hélice d'extrémité (13) sur l'étendue circonférentielle entière de ladite partie d'étanchéité annulaire (57).

8. Cellule d'échange de chaleur (1) selon la revendication 7, dans laquelle la valeur minimale de la distance axiale entre la partie d'étanchéité annulaire (57) et la surface extérieure (13") de la première spire d'hélice d'extrémité (13) est dimensionnée de manière à permettre aux fumées de combustion sortant de l'échangeur (10) et collectées dans la chambre de collecte de fumée (16) à toucher la partie d'étanchéité annulaire (57).

9. Cellule d'échange de chaleur (1) selon au moins une revendication précédente, dans laquelle la partie de contact annulaire (56) est formée selon un tour d'un hélicoïde autour dudit axe d'hélice (L-L) connecté aux extrémités de celui-ci moyennant une partie étagée (59), de sorte que ladite partie de contact annulaire (56) adhère à la surface extérieure (13") de la première spire d'extrémité (13).

10. Cellule d'échange de chaleur (1) selon au moins une revendication précédente, dans laquelle la partie d'étanchéité annulaire (57) a une forme plate située sur un plan orthogonal à l'axe de l'hélice (L-L).

11. Cellule d'échange de chaleur (1) selon au moins une revendication précédente, dans laquelle la partie de contact annulaire (56) comprend ladite partie de bord de bride annulaire radialement intérieure (54), et dans laquelle ladite partie de bord de bride annulaire radialement intérieure (54) a une forme courbée rejointe vers l'intérieur de la chambre de combustion (15) selon la courbure de la surface extérieure (13") de la spire d'hélice d'extrémité (13) de manière à y adhérer.

12. Cellule d'échange de chaleur (1) selon la revendication 11, dans laquelle la porte de fermeture (80) comprend un disque réfractaire (84) configuré pour être disposé coaxialement à l'axe d'hélice (L-L) et faisant face à la chambre de combustion (15), dans la position fermée de ladite porte de fermeture (80), dans laquelle ledit disque réfractaire (84) a une forme telle qu'il adhère à la partie de bord de bride annulaire radialement intérieure (54) et qu'il comprime une telle partie de bride annulaire radialement intérieure (54) contre ladite partie annulaire (13') de la surface extérieure (13") de ladite première spire d'hélice d'extrémité (13), interposant ladite partie de bord de bride annulaire radialement intérieure (54) entre ledit disque réfractaire (84) et ladite première spire d'hélice d'extrémité (13)dans la position fermée dans ladite porte de fermeture (80).

13. Cellule d'échange de chaleur (1) selon au moins une revendication précédente, dans laquelle la partie de bord de porte annulaire (81) comprend une partie de contact de butée annulaire (82), configurée pour être placée en contact direct contre ladite partie d'étanchéité annulaire (57) de la bride de fermeture (50), dans la position fermée de ladite porte de fermeture (80).

14. Cellule d'échange de chaleur (1) selon la revendication 13, dans laquelle la partie de bord de porte annulaire (81) est délimitée par un bord d'extrémité annulaire (83) de la porte, et dans laquelle la partie de contact de butée annulaire (82) est radialement interposée entre la partie de bord de bride annulaire radialement intérieure (54) et le bord d'extrémité annulaire (83) de la porte (80).

15. Cellule d'échange de chaleur (1) selon au moins une revendication précédente, dans laquelle la cellule d'échange de chaleur (1) comprend au moins un joint (90), ou garniture, adapté pour être interposé axialement et comprimé entre la partie d'étanchéité annulaire (57) de la bride (50) et la partie de bord de porte annulaire (81).

16. Cellule d'échange de chaleur (1) selon les revendications 14 et 15, dans laquelle ledit au moins un joint (90), ou garniture, est interposé radialement entre la partie de contact de butée annulaire (82) et le bord d'extrémité annulaire (83) de la porte, et/ou radialement à l'extérieur de ladite partie de contact de butée annulaire (82).

17. Cellule d'échange de chaleur (1) selon au moins une revendication précédente, dans laquelle la bride de fermeture (50) est dépourvue de parties de tôle se chevauchant selon une direction axiale parallèle à l'axe d'hélice (L-L).

18. Cellule d'échange de chaleur (1) selon au moins une revendication précédente, comprenant des moyens de fixation (58) pour serrer la porte (80) contre la bride de fermeture (50), dans laquelle de tels moyens de fixation (58) sont fixés à la partie de bord de bride annulaire radialement extérieure (53).
